(19) **Europäisches Patentamt**

**European Patent Office**

**Office européen des brevets**

(11) **EP 1 113 169 B1**

(12) **EUROPÄISCHE PATENTSCHRIFT**

(45) Veröffentlichungstag und Bekanntmachung des Hinweises auf die Patenterteilung:
**16.11.2005 Patentblatt 2005/46**

(51) Int Cl.⁷: **F02N 11/08**, F02N 17/00

(21) Anmeldenummer: **00113880.9**

(22) Anmeldetag: **30.06.2000**

(54) **Starteranordnung für eine Brennkraftmaschine und Verfahren zur Steuerung derselben**

Starter device for an internal combustion engine and method for controlling the same

Dispositif de démarrage de moteur à combustion interne et sa méthode de commande

(84) Benannte Vertragsstaaten:
**DE ES FR IT**

(30) Priorität: **28.12.1999 DE 19963356**

(43) Veröffentlichungstag der Anmeldung:
**04.07.2001 Patentblatt 2001/27**

(73) Patentinhaber: **ROBERT BOSCH GMBH**
**70442 Stuttgart (DE)**

(72) Erfinder:
- **Grob, Ferdinand**
  **74354 Besigheim (DE)**
- **Loeffler, Juergen**
  **71638 Ludwigsburg (DE)**
- **Huelser, Holger, Dr.**
  **70329 Stuttgart (DE)**

(56) Entgegenhaltungen:
**DE-A- 19 817 497        DE-A- 19 858 992**

**Beschreibung**

Die Erfindung betrifft eine Starteranordnung für eine Brennkraftmaschine mit den im Oberbegriff des Anspruchs 22 genannten Merkmalen sowie ein Verfahren zur Steuerung der Starteranordnung während eines Anlass- und Abstellvorganges der Brennkraftmaschine mit den im Oberbegriff des Anspruchs 1 genannten Merkmalen.

Stand der Technik

Aus dem Stand der Technik sind verschiedene Starteranordnungen bekannt, die sich im Wesentlichen auf drei Lösungsansätze zurückführen lassen, deren gemeinsames Grundprinzip eine Beaufschlagung einer Kurbelwelle der Brennkraftmaschine mittels einer durch eine elektrische Maschine aufgebrachten Kraft ist. Eine erste Bauart stellt einen sogenannten konventionellen elektrischen Starter dar, bei dem ein kleines Zahnrad (Anlasserritzel) auf einer Ankerwelle sitzt. Beim Anlassen wird das Ritzel mit einem Zahnkranz eines Motorschwungrades in Eingriff gebracht und dieses in Umdrehung versetzt. Nachteilig an einer solchen Lösung sind unter anderen die kurze erreichbare Gesamtbetriebsdauer und die als störend empfundene Geräuschentwicklung während des Anlassvorganges.

Ein zweiter möglicher Lösungsansatz ergibt sich durch einen Startergenerator mit Direktstart. Dabei ist der Startergenerator fest mit der Kurbelwelle verbunden und wird während des Betriebes der Brennkraftmaschine als Generator und während des Startes der Brennkraftmaschine als Startermotor betrieben. Nachteilig hierbei ist jedoch, dass die zum Start notwendige Startenergie relativ hoch ist und zumeist eine übliche Batterieleistung übersteigt. Aufgrund der in diesem Fall ausschließlich durch den Startergenerator bereitzustellenden hohen Startenergie muss der Startergenerator entsprechend groß dimensioniert sein, was bauraummäßig zu Schwierigkeiten führen kann. Zudem wäre ein solcher Startergenerator zum Starten einer betriebswarmen Brennkraftmaschine eindeutig überdimensioniert.

Eine dritte Bauart ermöglicht einen Start der Brennkraftmaschine mit wesentlich geringerer Batterieleistung, indem zunächst durch die elektrische Maschine eine Schwungmasse auf eine hohe Drehzahl gebracht wird (Schwungkraftanlasser). Erst dann wird mittels einer schnell schließenden Kupplung die Rotationsenergie der Schwungmasse auf die Brennkraftmaschine übertragen. Insgesamt ist der Zeitaufwand während des Anlassvorganges jedoch noch relativ hoch, so dass ein solcher Starter für moderne Fahrzeugkonzepte, wie einen Start-Stopp-Betrieb, ungeeignet ist.

Zur Verkürzung der Startzeit - der Zeit, die vom Aktivieren des Starters bis zum Erreichen einer Leerlaufdrehzahl verstreicht - ist eine sogenannte Auslauferkennung beim Abstellen der Brennkraftmaschine entwickelt worden. Gegenstand einer solchen Auslauferkennung ist die Erfassung eines Winkels einer Nockenwelle, um hieraus denjenigen Zylinder der Brennkraftmaschine zu bestimmen, in dem frühestmöglich eine Verbrennung stattfinden kann. Zwar lässt sich nach dem bisherigen Verfahren mittels geeigneter Sensoren eine Position der Kurbelwelle sehr genau erfassen, jedoch ist die Position der Nockenwelle zumeist weniger gut bestimmbar, da die benötigten Bezugsmarken nur unzureichend vorhanden sind. Hieraus ergibt sich für den Stand der Technik beim Einsatz sogenannter Schnellstartgeberräder, dass erst - wenn solch eine Bezugsmarke einen geeigneten Sensor passiert - über die Kombination mit dem Positionssignal der Kurbelwelle eine sichere Positionsbestimmung der Nockenwelle möglich ist. Insgesamt erfordert dies zumindest eine vollständige Kurbelwellenumdrehung.

Nach dem Abstellen der Brennkraftmaschine wird mittels der Auslauferkennung die Position der Nockenwelle abgespeichert. Ausgehend hiervon findet beim Start der Brennkraftmaschine eine erste sequentielle Einspritzung in dem Zylinder statt, in dem frühestmöglich eine Verbrennung erfolgen kann. Nachteilig hierbei ist jedoch, dass sich die Position auch nach Ende der Auslauferkennung noch verändern kann, beispielsweise wenn das Fahrzeug mit eingelegtem Gang und geschlossener Kupplung rollt oder geschoben wird.

Darüber hinaus ist bekannt, dass die Brennkraftmaschine vor dem Erreichen einer endgültigen Ruhelage pendelt, d. h. seine Drehrichtung ändert. Mittels der üblichen Sensorik kann die Drehrichtung im allgemeinen nicht erfasst werden, und insgesamt können somit die ermittelte und die tatsächliche Motorposition voneinander abweichen und den Schnellstart erschweren.

Aus der DE-A-198 17 497 ist bereits ein Verfahren zum Starten eines Verbrennungsmotors bekannt, bei dem die Kurbelwelle des Verbrennungsmotors mindestens auf eine zum Anspringen des Verbrennungsmotors notwendige Startdrehzahl beschleunigt wird. Ferner ist eine elektrische Maschine vorgesehen, die vor einem Startvorgang die Kurbelwelle in eine für den nächsten Start günstige Kurbelwinkelstellung bringt.

Aus der DE-A-198 58 992 ist eine Starteinheit für eine Brennkraftmaschine eines Kraftfahrzeugs bekannt, bei der in einer so genannten Startklärungsphase eine elektrische Maschine bei geschlossener Schaltkupplung die Kurbelwelle und die Brennkraftmaschine bewegt. In dieser Phase werden die vorliegenden Startverhältnisse erfasst und hiernach die nachfolgenden Betriebsphasen gewählt und die Startparameter dafür festgelegt.

Darüber hinaus ist bekannt, dass die Brennkraftmaschine vor dem Erreichen einer endgültigen Ruhelage pendelt, d. h. seine Drehrichtung ändert. Mittels der üblichen Sensorik kann die Drehrichtung im Allgemeinen nicht erfasst werden, und insgesamt können somit die ermittelte und die tatsächliche Motorposition voneinander abweichen und den Schnellstart erschweren.

Vorteile der Erfindung

Durch das erfindungsgemäße Verfahren zur Steuerung der Starteranordnung während eines Anlass- und Abstellvorganges der Brennkraftmaschine mit den Merkmalen des Anspruchs 1 lassen sich die Nachteile des Standes der Technik überwinden. Dabei beinhaltet die Starteranordnung zumindest folgende Komponenten:

- ein elektrisches Antriebssystem, insbesondere einen Schwungkraftanlasser, bei dem eine elektrische Maschine mit einer Welle direkt oder über ein Getriebe verbunden ist;

- eine steuerbare Kupplung, die einen Kraftschluss zwischen einer Kurbelwelle der Brennkraftmaschine und der Welle ermöglicht;

- eine Brennkraftmaschine, mit integrierter Sensorik zur Erfassung von Betriebsparametern, wie insbesondere einem Nockenwellen- und Kurbelwellenwinkel, und

- den Komponenten zugeordnete Sensoren zur Erfassung von Betriebsparametern sowie Stellmittel, die eine Änderung der Betriebsparameter der Komponenten der Starteranordnung ermöglichen.

Indem die Starteranordnung eine Antriebsstrangsteuerung mit Mitteln zum Einlesen und Bewerten der Betriebsparameter umfasst und die Sollgrößen für die Stellmittel während des Anlass- und Abstellvorganges durch die Antriebsstrangsteuerung vorgegeben werden, lässt sich der Startvorgang wesentlich sicherer durchführen.
Die erfindungsgemäße Starteranordnung mit den Merkmalen des Anspruchs 22 zeichnet sich demnach durch die Antriebsstrangsteuerung mit Mitteln zum Einlesen und Bewerten der Betriebsparameter sowie zur Bereitstellung von Sollgrößen für die Stellmittel aus.
Das elektrische Antriebssystem kann prinzipiell allen im Stand der Technik genannten Bauarten entsprechen. Es hat sich jedoch als besonders vorteilhaft erwiesen, einen Schwungkraftanlasser einzusetzen.
Vorteilhafterweise ist die Kupplung unter Zuhilfenahme geeigneter Stellmittel hinsichtlich des zu übertragenden Drehmomentes steuerbar. Eine solche Kupplung kann beispielsweise als Reibkupplung ausgelegt sein und elektromechanisch, elektrohydraulisch oder hydraulisch betrieben werden. Zum hydraulischen Betrieb ist es vorteilhaft, eine Hydraulikpumpe als Stellmittel einzusetzen, die unabhängig von einer Motordrehzahl den benötigten Hydraulikdruck erzeugt (externe Hydraulikpumpe). Die Hydraulikpumpe selbst kann dann wiederum durch die Antriebsstrangsteuerung reguliert werden.
Die erfindungsgemäße Starteranordnung lässt sich sowohl für Fahrzeuge mit Stufenautomatgetriebe und hydrodynamischem Wandler (AT) als auch für Fahrzeuge mit automatisiertem Schaltgetriebe (ASG) vorteilhaft verwenden. Üblicherweise sind den genannten Getrieben Stellmittel zugeordnet, die es erlauben, eine Neutralstellung ohne Vortrieb des Fahrzeuges vorzugeben, während der der Startvorgang initiiert werden soll. Beim Einsatz hydrodynamischer Wandler hat es sich als vorteilhaft erwiesen, als Stellmittel eine motordrehzahlunabhängige Hydraulikpumpe, wie sie auch zur Steuerung der Kupplung verwendet werden kann, einzusetzen. Selbstverständlich kann die Steuerung des Getriebes als auch der Kupplung mit derselben Hydraulikpumpe erfolgen.
Beim Einsatz einer Reibkupplung kann zur Auslauferkennung die Kupplung gesteuert geöffnet werden, wenn die Reib- und Kompressionsmomente der Brennkraftmaschine bekannt sind. Hierdurch soll die Brennkraftmaschine beim Abstellen bereits die für den Start optimale Position einnehmen, die es erlaubt, nach möglichst geringer Bewegung der Kurbelwelle beim erneuten Start in einem Zylinder eine Verbrennung zu zünden. Weiterhin ist durch das gesteuerte Entkuppeln ein Pendeln der Brennkraftmaschine erschwert.
Wenn noch nicht die optimale Position beim Abstellen der Brennkraftmaschine eingenommen wurde, lässt sich mit Hilfe der steuerbaren Kupplung und der elektrischen Maschine die Positionierung auch nach dem Stillstand durchführen. Anschließend wird die Kupplung geöffnet, um ein Verdrehen beim Schieben oder Rollen des Fahrzeuges zu vermeiden. Die beim Abstellen des Motors erkannte beziehungsweise eingestellte Abstellposition bleibt so unverändert erhalten.
Beim Einsatz eines Schwungkraftanlassers hat es sich als vorteilhaft erwiesen, zunächst nur die Schwungmasse der Schwungscheibe zu beschleunigen und erst ab einer vorgegebenen Drehzahl die Kupplung hinreichend schnell zu schließen. Letztere Drehzahl kann vorteilhafterweise temperaturabhängig ausgewählt werden. Bei noch bestehenden hohen Motortemperaturen ist das zum Start notwendige Drehmoment aufgrund einer gestiegenen Viskosität des Öls verringert. Alternativ hierzu kann zunächst auf eine feste Drehzahl beschleunigt werden, jedoch eine Schließzeit der Kupplung variiert werden. Weiterhin kann der Schließvorgang selbst gesteuert ablaufen, indem beispielsweise zunächst die Kupplung nur soweit geschlossen wird, bis die Brennkraftmaschine eine vorgegebene Startdrehzahl erreicht hat, um dann schlupffreien Kraftschluss bis zu einer Leerlaufdrehzahl der Brennkraftmaschine zu erzwingen.

Nach dem Erreichen der Leerlaufdrehzahl endet vorteilhafterweise die Unterstützung des elektrischen Antriebssystems. Weiterhin kann zur Verkürzung der Anlasszeit bereits mit der Einspritzung von Kraftstoff beim Hochlaufen der elektrischen Maschine begonnen werden, da dieser Vorgang oftmals relativ lange dauert. Nach der ersten Verbrennung erfolgt das Einspritzen des Kraftstoffes dann in konventioneller Weise vor die Einlassventile der geeigneten Zylinder.

Bei Verwendung einer motordrehzahlunabhängigen Hydraulikpumpe ist es vorteilhaft, diese bereits in Betrieb zu nehmen, bevor die Brennkraftmaschine die Startdrehzahl erreicht. So kann eine Betriebsbereitschaft bereits unmittelbar beim Start der elektrischen Maschine eingefordert werden, damit ein ausreichender Hydraulikdruck zum schnellen Schließen der Kupplung zur Verfügung steht. Beim Einsatz eines hydrodynamischen Wandlers hat es sich ferner als vorteilhaft erwiesen, zunächst Hydrauliköl aus dem Wandler abzusaugen, damit das Hochlaufen und anschließende Abbremsen der Schwungmasse nicht durch Verluste im Wandler gedämpft wird. Erst wenn der Motor seine Leerlaufdrehzahl erreicht hat, wird der Wandler in geeigneter Weise mit Hydrauliköl befüllt.

Weitere vorteilhafte Ausgestaltungen der Erfindung ergeben sich aus den übrigen, in den Unteransprüchen genannten Merkmalen.

Zeichnungen

Die Erfindung wird nachfolgend in einem Ausführungsbeispiel anhand der zugehörigen Zeichnungen näher erläutert. Es zeigen:

Figur 1    eine schematische Darstellung einer Starteranordnung;

Figur 2    eine Übersicht über die zur Steuerung benötigten Betriebsparameter;

Figur 3    ein Blockschaltbild zur Steuerung eines Start- oder Stoppvorganges und

Figur 4    einen zeitlichen Verlauf einer Drehzahl eines elektrischen Antriebssystems und einer Brennkraftmaschine.

Beschreibung des Ausführungsbeispiels

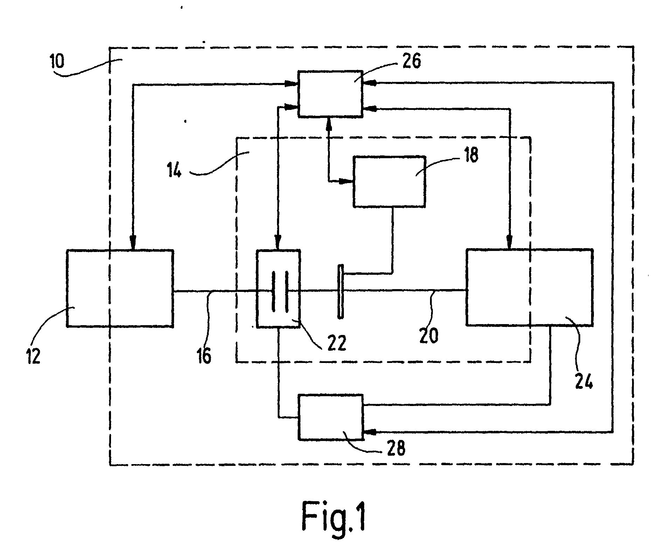

Die Figur 1 zeigt eine schematische Darstellung einer Starteranordnung 10 für eine Brennkraftmaschine 12. Die Starteranordnung 10 beinhaltet ein elektrisches Antriebssystem 14, das eine Kurbelwelle 16 während eines Start- oder Stoppvorganges der Brennkraftmaschine 12 gesteuert mit einem Drehmoment beaufschlagen kann. Dazu ist vorgesehen, dass das elektrische Antriebssystem 14 eine elektrische Maschine 18 umfasst, die über eine Welle 20 mit einer Kupplung 22 verbunden ist. Denkbar ist aber auch, dass die Verbindung zwischen der Welle 20 und der elektrischen Maschine 18 über ein Getriebe 24 hergestellt wird. Gemäß dem Ausführungsbeispiel ist die elektrische Maschine 18 von der Welle 20 entkoppelbar und kann - sofern gewünscht - als Generator betrieben werden.

Das elektrische Antriebssystem 14 ist als sogenannter Schwungkraftanlasser ausgelegt. Das heißt, durch die elektrische Maschine 18 wird zunächst eine Schwungmasse auf eine hohe Drehzahl gebracht, ehe ein Kraftschluss mittels der Kupplung 22 zwischen der Kurbelwelle 16 und der Welle 20 erfolgt.

Zur Koordination der einzelnen Komponenten der Starteranordnung 10 umfasst diese ferner eine Antriebsstrangsteuerung 26. Die Antriebsstrangsteuerung 26 ist mit Mitteln zum Einlesen und Bewerten der Betriebsparameter der einzelnen Komponenten ausgestattet. Eine Auswahl der zu bewertenden Betriebsparameter erfolgt in noch näher zu erläuternder Weise. Vorab bleibt lediglich an dieser Stelle festzuhalten, dass entsprechend den eingelesenen und bewerteten Betriebsparametern über die Antriebsstrangsteuerung 26 Sollgrößen für Stellmittel der einzelnen Komponenten vorgegeben werden, die zu einer Änderung der Betriebsparameter führen. Die Stellmittel können bereits in den jeweiligen Komponenten integriert sein, beispielsweise durch eine Drosselklappe, eine Abgasrückführung oder ein Einspritzsystem für die Brennkraftmaschine 12. Daneben ist es jedoch auch denkbar, dass die Starteranordnung 10 weitere externe Stellmittel umfasst, wie beispielsweise eine Hydraulikpumpe 28, mit der gemäß dem Ausführungsbeispiel sowohl die Kupplung 22 als auch das Getriebe 24 verstellbar ist.

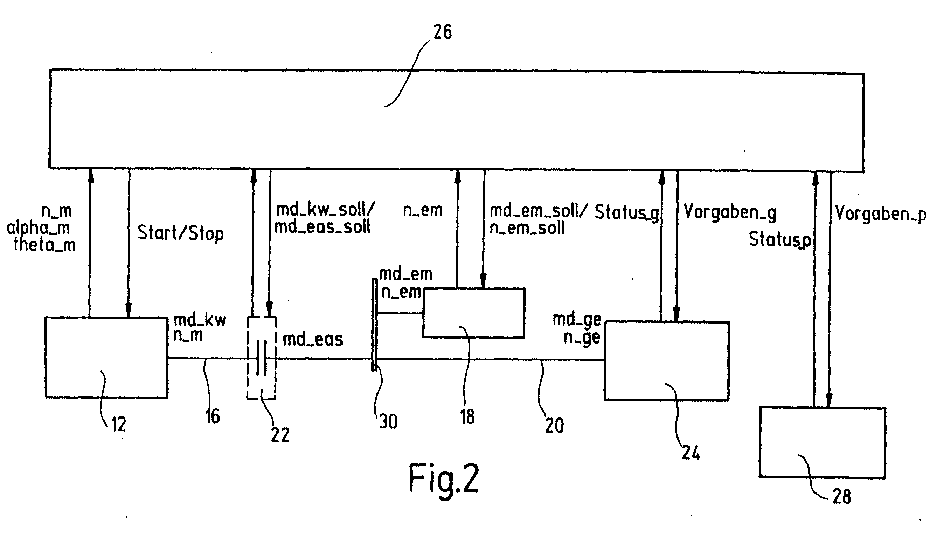

Die Figur 2 zeigt übersichtsweise die zur Steuerung des Start- oder Stoppvorganges der Brennkraftmaschine 12 notwendigen Betriebsparameter. Gemäß dem Ausführungsbeispiel besitzt die Brennkraftmaschine 12 eine Sensorik, mit der zumindest eine aktuelle Drehzahl $n\_m$, ein Kurbelwellenwinkel $alpha\_m$ und eine Motortemperatur $theta\_m$ auf die Antriebsstrangsteuerung 26 übertragen werden können. Im Gegenzug können dann in der Brennkraftmaschine 12 integrierte Stellmittel durch Vorgabe von Sollgrößen mittels der Antriebsstrangsteuerung 26 beeinflusst werden und so der Start- oder Stoppvorgang gesteuert ablaufen.

Die steuerbare Kupplung 22 ist vorteilhafterweise derart ausgelegt, dass sie ohne Betätigung durch die Antriebsstrangsteuerung 26 geöffnet ist. Auf diese Weise kann verhindert werden, dass durch Schieben oder Rollen des Fahrzeuges eine Position einer Nockenwelle der Brennkraftmaschine 12 verändert wird. Durch die Antriebsstrangsteuerung 26 werden ein Kurbelwellenmoment md_kw und ein Eingangsmoment md_eas des elektrischen Antriebssystems 14 in die Kupplung 22 erfasst und ein Sollkurbelwellenmoment md_kw_soll beziehungsweise Solleingangsmoment md_eas_soll vorgegeben. Die Ansteuerung der Kupplung 22 kann insbesondere hydraulisch, elektromechanisch oder elektrohydraulisch erfolgen.

Eine Solldrehzahl n_em_soll oder ein Sollmoment md_em_soll der elektrischen Maschine 18 kann mittels der Antriebsstrangsteuerung 26 anhand einer gemessenen Drehzahl n_em eingestellt werden. Eine Kraftübertragung der elektrische Maschine 18 auf die Welle 20 erfolgt entweder über das Getriebe 24 oder - wie dargestellt - mittels eines Zwischengetriebes 30 direkt. Im ersteren Falle lässt sich ein kinematisches Übersetzungsverhältnis i des Getriebes 24 festlegen durch:

$$n\_ge = \frac{1}{i} \cdot n\_em,$$

wobei n_ge eine Getriebeeingangsdrehzahl ist. Ein jeweiliger Status_g zeigt an, ob ein Gang eingelegt oder ein Kraftschluss unterbrochen worden ist. Gegebenenfalls kann mittels der Antriebsstrangsteuerung 26 entsprechend den Vorgaben_g eine Einstellung eines neuen Betriebszustandes erfolgen. Das Getriebe 24 kann als Stufenautomatgetriebe oder als automatisiertes Schaltgetriebe ausgestaltet sein.

Weiterhin können durch die Antriebsstrangsteuerung 26 Betriebsparameter weiterer Komponenten der Starteranordnung 10 erfasst beziehungsweise Sollgrößen vorgegeben werden. Exemplarisch sei hier ein Betriebszustand Status_p einer Hydraulikpumpe 28 und die entsprechenden Vorgaben_p genannt.

Der Stoppvorgang der Brennkraftmaschine 12 kann mittels der Starteranordnung 10 wie folgt durchgeführt werden:

Beim Abstellen der Brennkraftmaschine 12 wird zunächst das Getriebe 24 so angesteuert, dass kein Gang eingelegt ist und somit kein Kraftschluss zu einer Getriebeausgangswelle herrscht. Dazu wird der Betriebszustand. Status_g des Getriebes 24 überprüft und gegebenenfalls ein eingelegter Gang ausgekuppelt. In Abhängigkeit von der Motordrehzahl n_m, dem Kurbelwellenwinkel alpha_m und der Motortemperatur theta_m wird auf die Kupplung 22 ein Sollmoment md_eas_soll des elektrischen Antriebssystems 14 übertragen. Der elektrischen Maschine 18 wird in Abhängigkeit von den oben genannten Größen ein Sollmoment md_em_soll vorgegeben. Unter Berücksichtigung der bekannten Reib-und Kompressionsmomente der Brennkraftmaschine 12 wird die Kupplung 22 gesteuert geöffnet, das heißt eine Abstellposition definiert. Die Abstellposition wird dabei bevorzugt derart gewählt, dass nach möglichst geringer Drehung der Kurbelwelle 16 bereits eine Zündung eines Luft-Kraftstoff-Gemisches in einem Zylinder der Brennkraftmaschine 12 erfolgen kann. Außerdem wird durch das gesteuerte Öffnen der Kupplung 22 ein Pendeln der Nockenwelle der Brennkraftmaschine 12 verhindert und damit eine Auslauferkennung verbessert.

Die Abstellposition kann weiterhin mit Hilfe der elektrischen Maschine 18 und der steuerbaren Kupplung 22 auch nach Stillstand der Brennkraftmaschine 12 verändert werden. Dazu wird über die Kupplung 22 ein vorgebbares Drehmoment md_eas auf die Kurbelwelle 16 der Brennkraftmaschine 12 ausgeübt, wobei dieses Moment in oder entgegen der Drehrichtung der Brennkraftmaschine 12 wirken kann. Die genannten Maßnahmen erlauben es somit, den Stoppvorgang kontrolliert ablaufen zu lassen und eine gewünschte Abstellposition der Nockenwelle vorzugeben.

Gegebenenfalls kann bei einem stehenden, abgestellten Fahrzeug die Kupplung 24 geöffnet werden, um eine Änderung der Abstellposition, beispielsweise durch Schieben oder Rollen des Fahrzeuges, zu vermeiden.

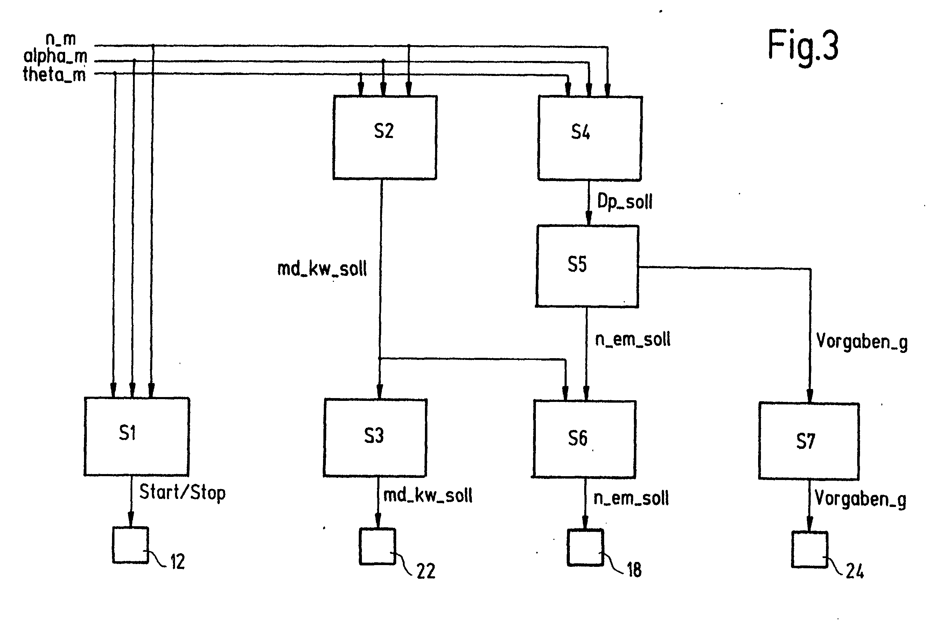

Eine erneuter Startvorgang erfolgt auf Grundlage der beim Abstellen der Brennkraftmaschine 12 erkannten Abstellposition. Eine Steuerung des Startvorganges über die Betriebsparameter der Komponenten der Starteranordnung 10 ist schematisch in der Figur 3 dargestellt. Die Bewertung der erfassten Betriebsparameter und Vorgabe der entsprechenden Sollgrößen erfolgt innerhalb der Antriebsstrangsteuerung 26.

Entsprechend der Motordrehzahl n_m, dem Kurbelwellenwinkel alpha_m und der Motortemperatur theta_m können in bekannter Weise die Stellmittel der Brennkraftmaschine 12 beeinflusst werden und der Start- beziehungsweise Stoppvorgang eingeleitet werden (Schritt S1).

Eben genannte Betriebsparameter können in einem Schritt S2 zur Berechnung des Sollkurbelwellenmomentes md_kw_soll herangezogen werden. Entsprechend dem Sollkurbelwellenmoment md_kw_soll erfolgt in einem Schritt S3 eine Beeinflussung der Stellmittel der Kupplung 22.

Parallel zu den oben genannten Maßnahmen wird aus der Drehzahl n_m, dem Kurbelwellenwinkel alpha_m und der Motortemperatur theta_m eine Vorgabe für ein Drehimpulspotential Dp_soll des elektrischen Antriebssystems 14 berechnet (Schritt S4). Das Drehimpulspotential Dp_soll ist ein zeitliches Integral der Momente, die das elektrische Antriebssystem 14 an der Kurbelwelle 16 bei einer Drehzahländerung auf eine Startdrehzahl n_start der Brennkraftmaschine 12 aufgrund seines Drehimpulses abgeben kann. Es ist:

$$Dp\_soll = (n\_ge\text{-}n\_Start)\cdot theta\_eas,$$

wobei theta_eas ein Drehträgheitsmoment des elektrischen Antriebssystems 14 ist.

Das elektrische Antriebssystem 14 umfasst dabei die elektrische Maschine 18 und die über das Getriebe 24 mit der Übersetzung i mit ihr verbundenen Drehmassen. Dazu gehören auch die mit der Welle 20 fest verbundenen Teile des Getriebes 24. Es ist folglich:

$$theta\_eas = theta\_welle + theta\_em\cdot i^2 + theta\_ge,$$

wobei theta_welle ein Drehträgheitsmoment der Welle zwischen Kupplung 22 und dem Getriebe 24, theta_em ein Drehträgheitsmoment der elektrischen Maschine 18 und theta_ge ein Drehträgheitsmoment der mit der Welle fest verbundenen Teile des Getriebes 24 ist.

In einem Schritt S5 wird mit Hilfe des Drehimpulspotentials Dp eine Solldrehzahl n_em_soll der elektrischen Maschine 18 ermittelt. Dabei gilt für die Solldrehzahl n_em_soll:

$$n\_em\_soll \;=\; i \cdot \left( \frac{Dp\_soll}{theta\_eas} + n\_Start \right).$$

Über geeignete Stellmittel erfolgt dann eine Beeinflussung der Drehzahl n_em der elektrischen Maschine 18 (Schritt S6).

Das Drehträgheitsmoment theta_ge der mit der Welle 20 fest verbundenen Teile des Getriebes 24 lässt sich durch entsprechende Vorgaben (Vorgaben_g) für die Stellmittel des Getriebes 24 ändern (Schritt S7). So kann im Falle eines hydrodynamischen Wandlers eine mechanische Konfiguration hinsichtlich Drehträgheitsmoment oder eingelegtem Gang verändert werden. Verfügt der hydrodynamische Wandler über eine regel-oder zumindest steuerbare Überbrückungskupplung, so kann durch Schließen der Überbrückungskupplung das Trägheitsmoment theta_ge der mit der Welle 20 fest verbundenen Teile des Getriebes 24 erhöht werden. Analog kann theta_ge durch ein Öffnen der Überbrückungskupplung reduziert werden. Im Schritt S7 wird weiterhin eine Neutralstellung des Getriebes 24 während des Startvorganges sichergestellt, da ja über die Kupplung 22 eine feste Verbindung zwischen Kupplung 22 und der Welle 20 hergestellt werden soll.

Der Startvorgang lässt sich in drei aufeinander folgende Phasen gliedern:

- in eine erste Phase vor Übertragung des Drehmomentes md_eas von dem elektrischen Antriebssystem 14 auf die Kurbelwelle 12;

- in eine zweite Phase mit Beginn der Drehmomentenübertragung und

- in eine dritte Phase mit Erreichen einer Leerlaufdrehzahl n_ll der Brennkraftmaschine 12.

Vor dem eigentlichen Startvorgang kann eine Vorpositionierung der Brennkraftmaschine 12 erfolgen, so dass eine vorteilhafte Startposition eingestellt wird. Dazu wird durch geeignete Ansteuerung der elektrischen Maschine 18 und der Kupplung 22 ein Drehmoment md_eas auf die Kurbelwelle 16 der Brennkraftmaschine 12 übertragen, so dass ein geeignetes Vor- beziehungsweise Zurückdrehen der Kurbelwelle 16 bewirkt wird.

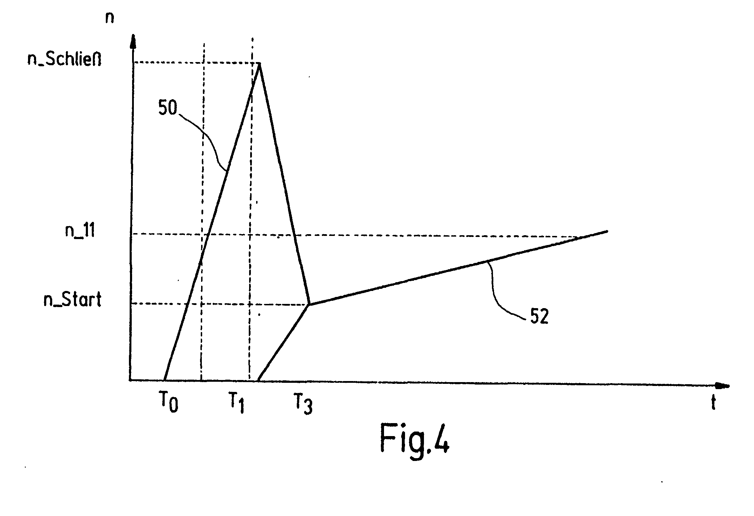

Beim Start der Brennkraftmaschine mittels Schwungkraft werden in der ersten Phase die Schwungmassen zunächst beginnend von einem Zeitpunkt $T_0$ auf eine Drehzahl n_Schließ beschleunigt (siehe Kurve 50 in Figur 4). Sobald in der rotierenden Schwungmasse ausreichend Energie gespeichert ist, wird die Kupplung 22 zu einem Zeitpunkt $T_1$ sukzessiv geschlossen und damit die Brennkraftmaschine 12 in Rotation versetzt (Beginn der zweiten Phase). Erst zu einem Zeitpunkt $T_2$ wird die Kupplung 22 dann vollständig geschlossen, und die Drehzahl von Schwungmasse und Brennkraftmaschine 12 (Kurve 52) stimmen überein. Dies setzt voraus, dass die Kupplung hinreichend schnell geschlossen werden kann, was bei elektromechanischer oder elektrohydraulischer Betätigung sichergestellt ist. Erfolgt die Ansteuerung der Kupplung 22 allerdings hydraulisch, so muss zwecks Bereitstellung eines ausreichenden Hydraulikdruckes auch bei stehender Brennkraftmaschine 12 eine von der Motordrehzahl n_m unabhängige Hydraulikpumpe 28 vorhanden sein. Die Hydraulikpumpe 28 muss demnach bereits frühzeitig aktiviert werden, insbesondere unmittelbar beim Start der elektrischen Maschine 18. Auf diese Weise steht ein ausreichender Hydraulikdruck zum schnellen Schließen der Kupplung 22 zur Verfügung.

Die Hydraulikpumpe 28 kann weiterhin beim Einsatz eines hydrodynamischen Wandlers im Getriebe 24 als Stellmittel verwendet werden. Eine Hydraulik des Getriebes 24 ist in diesem Fall derart auszugestalten, dass die Hydraulikpumpe 28 in der Lage ist, in der ersten Phase Hydrauliköl aus dem Wandler abzusaugen. Während des Startvorganges wird dann zunächst Hydrauliköl, aus dem Wandler abgesaugt und damit ein Hochlaufen und anschließendes Abbremsen der Schwungmasse nicht durch Verluste im Wandler gedämpft. Erst wenn die Brennkraftmaschine 12 die Leerlaufdrehzahl n_ll erreicht hat (dritte Phase), wird der Wandler in geeigneter Weise mit Hydrauliköl befüllt, um ein Anfahren des Fahrzeuges zu ermöglichen. Während der Fahrt können Druck- und Volumenstrom des Hydrauliköls mittels der Hydraulikpumpe 28 dem aktuellen Bedarf des Getriebes 24 angepasst werden.

Das Schließen der Kupplung 22 in der zweiten Phase kann zusätzlich abhängig von der Motortemperatur theta_m gemacht werden. Mit steigender Temperatur und damit steigender Viskosität eines zur Schmierung der Brennkraftmaschine 12 notwendigen Öls ist gleichzeitig das zum Start notwendige, zu übertragende Drehmoment md_eas des elektrischen Antriebssystems 14 gemindert. Daher verringert sich die Drehzahl n_Schließ mit steigender Motortemperatur theta_m.

Alternativ zu letztgenannter Maßnahme kann jedoch auch eine feste Drehzahl für n_Schließ vorgegeben werden, auf die die Schwungmasse in jedem Falle beschleunigt werden muss. In diesem Fall kann durch eine Variation einer Schließzeit der Kupplung 22 zwischen den Zeitpunkten $T_1$ und $T_2$ eine temperaturunabhängige Startdrehzahl n_Start der Brennkraftmaschine 12 vorgegeben werden. Der Schließvorgang der Kupplung 22 selbst kann über eine vorgebbare Kennlinie gesteuert werden. Ein schlupffreier Kraftschluss kann beispielsweise erst nach dem Erreichen der Startdrehzahl n_Start der Brennkraftmaschine 12 vorgegeben sein.

Ein Hochlaufen der Brennkraftmaschine 12 kann auch nach dem vollständigen Schließen der Kupplung 22 - gemäß dem Ausführungsbeispiel ab dem Zeitpunkt $T_2$ - durch die elektrische Maschine 18 unterstützt werden. Diese Unterstützung endet vorteilhafterweise mit Beginn der dritten Phase, wenn die Brennkraftmaschine die Leerlaufdrehzahl n_ll erreicht hat. Ab diesem Zeitpunkt kann die elektrische Maschine 18 in einen Generatorbetrieb umgeschaltet werden.

Zur Beschleunigung des Startvorganges ist es vorteilhaft, einen Kraftstoff bereits in der ersten Phase mit dem Hochlaufen der elektrischen Maschine 18 vor dem Einspritzventil desjenigen Zylinders einzuspritzen, in dem die nächste Verbrennung stattfinden kann, da eine Zeitdauer einer ersten Einspritzung oftmals relativ lange dauert. Nach der ersten Verbrennung erfolgt das Einspritzen des Kraftstoffes dann in konventioneller Weise vor die Einlassventile der geeigneten Zylinder.

**Patentansprüche**

1. Verfahren zur Steuerung einer Starteranordnung während eines Start- und Stoppvorganges einer Brennkraftmaschine, wobei die Starteranordnung zumindest folgende Komponenten beinhaltet:

  - ein elektrisches Antriebssystem, insbesondere einen Schwungkraftanlasser, bei dem eine elektrische Maschine mit einer Welle direkt oder über ein Getriebe verbunden ist;

  - eine steuerbare Kupplung, die einen Kraftschluss zwischen einer Kurbelwelle der Brennkraftmaschine und der Welle ermöglicht;

  - eine Brennkraftmaschine mit integrierter Sensorik zur Erfassung von Betriebsparametern, wie insbesondere einem Nockenwellen- und Kurbelwellenwinkel, und

  - den Komponenten zugeordnete Sensoren zur Erfassung von Betriebsparametern sowie Stellmittel, die eine Änderung der Betriebsparameter der Komponenten der Starteranordnung ermöglichen,

  wobei die Starteranordnung (10) eine Antriebsstrangsteuerung (26) mit Mitteln zum Einlesen und Bewerten der Betriebsparameter umfasst und die Sollgrößen für die Stellmittel während des Start- und Stoppvorganges durch die Antriebsstrangsteuerung (26) vorgegeben werden, **dadurch gekennzeichnet, dass** während des Stoppvorganges die Kupplung (22) in Abhängigkeit von einem Kurbelwellenwinkel (alpha_m), einer Motordrehzahl (n_m) und einer Motortemperatur (theta_m) gesteuert geöffnet wird, um eine Abstellposition zu erreichen, die es erlaubt, nach möglichst geringer Drehung der Kurbelwelle (16) beim erneuten Start in einem Zylinder eine Verbrennung zu zünden.

2. Verfahren nach Anspruch 1, **dadurch gekennzeichnet, dass** die steuerbare Kupplung (22) eine Reibkupplung ist, deren Kraftschluss elektromechanisch, elektrohydraulisch oder hydraulisch mit der Antriebsstrangsteuerung (26) geregelt wird.

3. Verfahren nach Anspruch 2, **dadurch gekennzeichnet, dass** die Abstellposition durch eine Ansteuerung der elektrischen Maschine (18) und der Kupplung (22) erreicht wird, indem ein entsprechendes Moment nach einem Stillstand der Brennkraftmaschine (12) auf die Kurbelwelle (16) übertragen wird.

4. Verfahren nach einem der vorhergehenden Ansprüche, **dadurch gekennzeichnet, dass** die Steuerung des Startvorganges eine Beeinflussung von

   - einem Kurbelwellenmoment (md_kw) über die Kupplung (22) ;

   - einer Drehzahl (n_em) der elektrischen Maschine (18);

   - einem Betriebszustand (Status_g) des Getriebes (24)

   umfasst.

5. Verfahren nach Anspruch 4, **dadurch gekennzeichnet, dass** ein Sollkurbelwellenmoment (md_kw_soll) in Abhängigkeit von der Motordrehzahl (n_m), dem Kurbelwellenwinkel (alpha_m) und der Motortemperatur (theta_m) berechnet und dem Getriebe (24) vorgegeben wird.

6. Verfahren nach Anspruch 4, **dadurch gekennzeichnet, dass** zur Ermittlung einer Solldrehzahl (n_em_soll) für die elektrische Maschine (18) zunächst in Abhängigkeit von der Motordrehzahl (n_m), dem Kurbelwellenwinkel (alpha_m) und der Motortemperatur (theta_m) ein Sollwert für ein Drehimpulspotential (Dp_soll) nach folgender Formel bestimmt wird:

$$Dp\_soll = (n\_ge\text{-}n\_Start) \cdot theta\_eas,$$

wobei (n_Start) eine Startdrehzahl der Brennkraftmaschine (12), (theta_eas) ein Trägheitsmoment des elektrischen Antriebssystems (14) und (n_ge) eine Getriebeeingangsdrehzahl ist und die Solldrehzahl (n_em_soll) über einen Zusammenhang

$$n\_em\_soll \;\; = \;\; i \cdot \left( \frac{Dp\_soll}{theta\_eas} + n\_Start \right)$$

mit einer Übersetzung (i) des Getriebes (24) gegeben ist.

7. Verfahren nach Anspruch 6, **dadurch gekennzeichnet, dass** das Drehträgheitsmoment (theta_eas) nach folgender Formel bestimmbar ist:

$$theta\_eas = theta\_welle + theta\_em \cdot i^2 + theta\_ge,$$

wobei (theta_welle) ein Drehträgheitsmoment der Welle (20), (theta_em) ein Drehträgheitsmoment der elektrischen Maschine (18) und (theta_ge) ein Drehträgheitsmoment von mit der Welle (20) fest verbundenen Teilen des Getriebes (24) ist.

8. Verfahren nach einem der vorhergehenden Ansprüche, **dadurch gekennzeichnet, dass** der Startvorgang in drei aufeinanderfolgende Phasen gegliedert werden kann, mit:

   - einer ersten Phase vor Übertragung eines Drehmomentes (md_eas) von dem elektrischen Antriebssystem (14) über die Kupplung (22) auf die Kurbelwelle (16);

   - einer zweiten Phase mit Beginn der Drehmomentenübertragung und

- einer dritten Phase mit Erreichen einer Leerlaufdrehzahl (n_ll) der Brennkraftmaschine (12).

9. Verfahren nach Anspruch 8, **dadurch gekennzeichnet, dass** in der ersten Phase Kraftstoff vor ein Einspritzventil desjenigen Zylinders eingespritzt wird, in dem laut Auslauferkennung die nächste Verbrennung stattfinden kann.

10. Verfahren nach Anspruch 8, **dadurch gekennzeichnet, dass** in der ersten Phase eine Neutralstellung im Getriebe (24) eingelegt wird (Vorgaben_g zur Änderung des Betriebszustandes Status_g).

11. Verfahren nach Anspruch 8, **dadurch gekennzeichnet, dass** in der ersten Phase die Schwungmassen durch die elektrische Maschine (18) auf eine Drehzahl (n_Schließ) beschleunigt werden.

12. Verfahren nach Anspruch 11, **dadurch gekennzeichnet, dass** die Drehzahl (n_Schließ) in Abhängigkeit von der Motortemperatur (theta_m) vorgegeben wird.

13. Verfahren nach den Ansprüchen 8 und 9, **dadurch gekennzeichnet, dass** in der zweiten Phase eine Zündung eines Luft-Kraftstoff-Gemisches in dem ausgewählten Zylinder erfolgt.

14. Verfahren nach den Ansprüchen 8 und 11, **dadurch gekennzeichnet, dass** in der zweiten Phase eine Drehmomentenunterstützung durch die elektrische Maschine (18) erfolgt.

15. Verfahren nach den Ansprüchen 8 und 11, **dadurch gekennzeichnet, dass** in der zweiten Phase ein Abbremsen der Schwungmassen durch die Kupplung (22) entsprechend einer vorgegebenen Kennlinie für die Motordrehzahl (n_m) erfolgt.

16. Verfahren nach Anspruch 8, **dadurch gekennzeichnet, dass** in der dritten Phase ein Betriebsmodus der elektrischen Maschine (18) auf Generatorbetrieb umgeschaltet wird.

17. Verfahren nach einem der vorhergehenden Ansprüche, **dadurch gekennzeichnet, dass** die Kupplung (22) hydraulisch steuerbar ist und als ein Stellmittel eine Hydraulikpumpe (28), die unabhängig von der Motordrehzahl (n_m) ist, eingesetzt wird.

18. Verfahren nach den Ansprüchen 8 und 17, **dadurch gekennzeichnet, dass** in der ersten Phase die Hydraulikpumpe (28) aktiviert wird.

19. Verfahren nach einem der vorhergehenden Ansprüche, **dadurch gekennzeichnet, dass** das Getriebe (24) ein hydrodynamischer Wandler ist und als Stellmittel die Hydraulikpumpe (28) eingesetzt wird.

20. Verfahren nach den Ansprüche 8 und 19, **dadurch gekennzeichnet, dass** in der ersten Phase ein Hydrauliköl des Wandlers durch die Hydraulikpumpe (28) abgesaugt wird und in der dritten Phase wieder dem Wandler zugeführt wird.

21. Starteranordnung für eine Brennkraftmaschine, die zumindestens folgende Komponenten beinhaltet:

- ein elektrisches Antriebssystem, insbesondere einen Schwungkraftanlasser, bei dem eine elektrische Maschine mit einer Welle direkt oder über ein Getriebe verbunden ist;

- eine steuerbare Kupplung, die einen Kraftschluss zwischen einer Kurbelwelle der Brennkraftmaschine und der Welle ermöglicht;

- eine Brennkraftmaschine, mit integrierter Sensorik zur Erfassung von Betriebsparametern, wie insbesondere einem Nockenwellen- und Kurbelwellenwinkel, und

- den Komponenten zugeordnete Sensoren zur Erfassung von Betriebsparametern sowie Stellmittel, die eine Änderung der Betriebsparameter der Komponenten der Starteranordnung ermöglichen,

wobei die Starteranordnung (10) eine Antriebsstrangsteuerung (26) mit Mitteln zum Einlesen und Bewerten der Betriebsparameter und zur Vorgabe von Sollgrößen für die Stellmittel während des Start- und Stoppvorganges umfasst, **dadurch gekennzeichnet, dass** die Antriebsstrangsteuerung (26) während des Stoppvorganges die Kupplung (22) in Abhängigkeit von einem Kurbelwellenwinkel (alpha_m), einer Motordrehzahl (n_m) und einer Motortemperatur (theta_m) öffnet, um eine Abstellposition zu erreichen, die es erlaubt, nach möglichst geringer Drehung der Kurbelwelle (16) beim erneuten Start in einem Zylinder eine Verbrennung zu zünden.

22. Starteranordnung nach Anspruch 21, **dadurch gekennzeichnet, dass** die Kupplung (22) eine Reibkupplung ist, deren Kraftschluss elektromechanisch, elektrohydraulisch oder hydraulisch regelbar ist.

23. Starteranordnung nach Anspruch 22, **dadurch gekennzeichnet, dass** eine Hydraulikpumpe (28), die unabhängig von einer Motordrehzahl (n_m) steuerbar ist, zur Bereitstellung eines Hydraulikdruckes vorgesehen ist.

24. Starteranordnung nach einem der Ansprüche 21 bis 23, **dadurch gekennzeichnet, dass** das Getriebe (24) ein Stufenautomatgetriebe, eine hydrodynamischer Wandler oder automatisiertes Schaltgetriebe ist.

25. Starteranordnung nach Anspruch 24, **dadurch gekennzeichnet, dass** die Hydraulikpumpe (28) ein Stellmittel des hydrodynamischen Wandlers ist.


**Claims**

1. Method for controlling a starter arrangement during a starting and stopping operation of an internal combustion engine, the starter arrangement comprising at least the following components:

   - an electric drive system, in particular an inertia starter, in which an electric machine is connected to a shaft directly or via a gearbox;

   - a controllable clutch which makes a force flow possible between a crankshaft of the internal combustion engine and the shaft;

   - an internal combustion engine with an integrated sensor system for detecting operating parameters such as, in particular, a camshaft angle and a crankshaft angle, and

   - sensors which are assigned to the components for detecting operating parameters, and actuating means which make it possible to change the operating parameters of the components of the starter arrangement,

   the starter arrangement (10) comprising a drive train controller (26) with means for reading and evaluating the operating parameters, and the setpoint values for the actuating means being predefined during the starting and stopping operation by the drive train controller (26), **characterized in that**, during the stopping operation, the clutch (22) is opened in a controlled manner as a function of a crankshaft angle (alpha_m), an engine speed (n_m) and an engine temperature (theta_m), in order to reach a switching-off position which allows a combustion process to be ignited in a cylinder in the event of a restart, after as small a rotation of the crankshaft (16) as possible.

2. Method according to Claim 1, **characterized in that** the controllable clutch (22) is a friction clutch, the force flow of which is controlled electromechanically, electrohydraulically or hydraulically by way of the drive train controller (26).

3. Method according to Claim 2, **characterized in that** the switching-off position is reached by activation of the electric machine (18) and the clutch (22), **in that** a corresponding moment is transmitted to the crankshaft (16) after the internal combustion engine (12) has come to a standstill.

4. Method according to one of the preceding claims, **characterized in that** the control of the starting operation comprises influencing

   - a crankshaft moment (md_kw) via the clutch (22);

   - a rotational speed (n_em) of the electric machine (18);

   - an operating state (Status_g) of the gearbox (24).

**5.** Method according to Claim 4, **characterized in that** a setpoint crankshaft moment (md_kw_soll) is calculated as a function of the engine speed (n_m), the crankshaft angle (alpha_m) and the engine temperature (theta_m) and stipulated to the gearbox (24).

**6.** Method according to Claim 4, **characterized in that**, in order to detect a setpoint rotational speed (n_em_soll) for the electric machine (18), a setpoint value for an angular momentum potential (Dp_soll) is initially determined as a function of the engine speed (n_m), the crankshaft angle (alpha_m) and the engine temperature (theta_m), according to the following formula:

$$Dp\_soll = (n\_ge\text{-}n\_Start) \cdot theta\_eas \,,$$

(n_Start) being a starting speed of the internal combustion engine (12), (theta_eas) being a moment of inertia of the electric drive system (14) and (n_ge) being a gearbox input speed, and the setpoint rotational speed (n_em_soll) existing with a transmission ratio (i) of the gearbox (24) via a relationship

$$n\_em\_soll = i \cdot \left( \frac{Dp\_soll}{theta\_eas} + n\_Start \right).$$

**7.** Method according to Claim 6, **characterized in that** the rotational moment of inertia (theta_eas) can be determined according to the following formula:

$$theta\_eas = theta\_welle + theta\_em \cdot i^2 + theta\_ge,$$

(theta_welle) being a rotational moment of inertia of the shaft (20), (theta_em) being a rotational moment of inertia of the electric machine (18) and (theta_ge) being a rotational moment of inertia of parts of the gearbox (24) which are connected fixedly to the shaft (20).

**8.** Method according to one of the preceding claims, **characterized in that** the starting operation can be divided into three phases which follow one another, having:

- a first phase before transmission of a torque (md_eas) from the electric drive system (14) to the crankshaft (16) via the clutch (22);

- a second phase with the start of the torque transmission, and

- a third phase with the reaching of an idling speed (n_11) of the internal combustion engine (12).

**9.** Method according to Claim 8, **characterized in that**, in the first phase, fuel is injected ahead of an injection valve of that cylinder in which the next combustion process can take place according to the run-out detection.

**10.** Method according to Claim 8, **characterized in that**, in the first phase, a neutral position is selected in the gearbox (24) (Vorgaben_g in order to change the operating state Status_g).

**11.** Method according to Claim 8, **characterized in that**, in the first phase, the centrifugal masses are accelerated to a rotational speed (n_Schließ) by the electric machine (18).

**12.** Method according to Claim 11, **characterized in that** the rotational speed (n_Schließ) is predefined as a function of the engine temperature (theta_m).

**13.** Method according to Claims 8 and 9, **characterized in that**, in the second phase, a fuel-air mixture is ignited in the selected cylinder.

**14.** Method according to Claims 8 and 11, **characterized in that**, in the second phase, a torque assistance operation is carried out by the electric machine (18).

**15.** Method according to Claims 8 and 11, **characterized in that**, in the second phase, the centrifugal masses are braked by the clutch (22), in accordance with a predefined characteristic curve for the engine speed (n_m).

**16.** Method according to Claim 8, **characterized in that**, in the third phase, an operating mode of the electric machine (18) is switched over to generator mode.

**17.** Method according to one of the preceding claims, **characterized in that** the clutch (22) can be controlled hydraulically and a hydraulic pump (28) which is independent of the engine speed (n_m) is used as an actuating means.

**18.** Method according to Claims 8 and 17, **characterized in that**, in the first phase, the hydraulic pump (28) is activated.

**19.** Method according to one of the preceding claims, **characterized in that** the gearbox (24) is a hydrodynamic converter and the hydraulic pump (28) is used as actuating means.

**20.** Method according to Claims 8 and 19, **characterized in that**, in the first phase, a hydraulic oil of the converter is removed by suction by the hydraulic pump (28) and, in the third phase, fed to the converter again.

**21.** Starter arrangement for an internal combustion engine, which starter arrangement comprises at least the following components:

- an electric drive system, in particular an inertia starter, in which an electric machine is connected to a shaft directly or via a gearbox;

- a controllable clutch which makes a force flow possible between a crankshaft of the internal combustion engine and the shaft;

- an internal combustion engine with an integrated sensor system for detecting operating parameters such as, in particular, a camshaft angle and a crankshaft angle, and

- sensors which are assigned to the components for detecting operating parameters, and actuating means which make it possible to change the operating parameters of the components of the starter arrangement,

the starter arrangement (10) comprising a drive train controller (26) with means for reading and evaluating the operating parameters and for predefining setpoint values for the actuating means during the starting and stopping operation, **characterized in that** the drive train controller (26) opens the clutch (22) during the stopping operation as a function of a crankshaft angle (alpha_m), an engine speed (n_m) and an engine temperature (theta_m), in order to reach a switching-off position which allows a combustion process to be ignited in a cylinder in the event of a restart, after as small a rotation of the crankshaft (16) as possible.

**22.** Starter arrangement according to Claim 21, **characterized in that** the clutch (22) is a friction clutch, the force flow of which can be controlled electromechanically, electrohydraulically or hydraulically.

**23.** Starter arrangement according to Claim 22, **characterized in that** a hydraulic pump (28) which can be controlled independently of an engine speed (n_m) is provided in order to provide a hydraulic pressure.

**24.** Starter arrangement according to one of Claims 21 to 23, **characterized in that** the gearbox (24) is a multi-step reduction automatic gearbox, a hydrodynamic converter or an automated change-speed gearbox.

**25.** Starter arrangement according to Claim 24, **characterized in that** the hydraulic pump (28) is an actuating means of the hydrodynamic converter.

**Revendications**

**1.** Dispositif de commande d'un dispositif de démarrage d'un moteur à combustion interne en mode marche/arrêt, comprenant au moins les composants suivants :

- un système d'entraînement électrique notamment un démarreur à inertie avec une machine électrique reliée à un arbre directement ou par une transmission,
- un embrayage commandé permettant la transmission de la force entre le vilebrequin du moteur à combustion interne et l'arbre,
- un moteur à combustion interne avec un ensemble de capteurs intégrés pour saisir les paramètres de fonctionnement notamment l'angle de l'arbre à cames et celui du vilebrequin, et
- des capteurs associés aux composants pour saisir les paramètres de fonctionnement ainsi que des actionneurs permettant de modifier les paramètres de fonctionnement des composants du dispositif de démarrage,

le dispositif de démarrage (10) comprenant une commande de ligne d'entraînement (26) avec des moyens pour enregistrer et exploiter les paramètres de fonctionnement et prédéfinir les grandeurs de consigne des actionneurs pendant le mode marche/arrêt par la commande de la ligne d'entraînement (26),
**caractérisé en ce que**
pendant l'opération d'arrêt, l'embrayage (22) est commandé à l'ouverture en fonction d'un angle de vilebrequin (alpha_m) d'un régime moteur (n_m) et d'une température de moteur (theta_m) pour arriver à une position d'arrêt permettant après une rotation aussi faible que possible du vilebrequin (16) d'allumer une combustion dans un cylindre pour démarrer de nouveau.

2. Procédé selon la revendication 1,
   **caractérisé en ce que**
   l'embrayage commandé (22) est un embrayage à friction dont la liaison de force est régulée par un moyen électromécanique, electrohydraulique ou hydraulique à partir de la commande de la ligne d'entraînement (26).

3. Procédé selon la revendication 2,
   **caractérisé en ce que**
   la position d'arrêt est atteinte par une commande de la machine électrique (18) et de l'embrayage (22), en transmettant un couple approprié au vilebrequin (16) après l'arrêt du moteur à combustion interne (12).

4. Procédé selon l'une quelconque des revendications précédentes,
   **caractérisé en ce que**
   la commande de l'opération de démarrage comprend une action d'influence de,

   - un couple de vilebrequin (md_kw) par l'embrayage (22),
   - une vitesse de rotation (n_em) d'une machine électrique (18),
   - un état de fonctionnement (état_g) de la transmission (24).

5. Procédé selon la revendication 4,
   **caractérisé en ce qu'**
   on calcule un couple de consigne de vilebrequin (md_kw_cons) en fonction du régime moteur (n_m), de l'angle de vilebrequin (alpha_m) et de la température du moteur (theta_m), et on prédéfinit ce couple de consigne pour la transmission (24).

6. Procédé selon la revendication 4,
   **caractérisé en ce que**
   pour déterminer une vitesse de rotation de consigne (n_em_cons) de la machine électrique (18), on détermine tout d'abord en fonction du régime moteur (n_m), de l'angle de vilebrequin (alpha_m) et de la température du moteur (theta_m) une valeur de consigne du potentiel impulsionnel de rotation (Dp_cons) selon la formule suivante :

$$Dp\_cons = (n\_ge - n\_démarrage).\ theta\_eas,$$

formule dans laquelle,
(n_démarrage) représente une rotation de démarrage du moteur à combustion interne (12),
(théta_eas) représente le moment d'inertie du système d'entraînement électrique (14), et
(n_ge) représente une vitesse de rotation d'entrée de boîte de vitesses, et la vitesse de rotation de consigne (n_em_cons) est donnée par la relation suivante :

$$n\_em\_cons = i \cdot \left( \frac{Dp\_cons}{theta\_eas} + n\_démarrage \right)$$

pour le rapport des vitesses (i) de la boîte de vitesses (24).

7. Procédé selon la revendication 6,
**caractérisé en ce que**
le moment d'inertie de rotation (theta_eas) est donné par la formule suivante :

$$theta\_eas = theta\_arbre + theta\_em. \, i^2 + theta\_ge,$$

dans laquelle,
(theta_arbre) est le moment d'inertie de rotation de l'arbre (20),
(theta_em) est le moment d'inertie de rotation de la machine électrique (18), et
(theta_ge) est le moment d'inertie de rotation de pièces de la boîte de vitesses (24) reliées solidairement à l'arbre (20).

8. Procédé selon l'une quelconque des revendications précédentes,
**caractérisé en ce que**
l'opération de démarrage est décomposée en trois phases successives :

- une première phase avant la transmission d'un couple (md_eas) par le système d'entraînement électrique (14) par l'embrayage (22) au vilebrequin (16),
- une seconde phase pour le début de la transmission du couple, et
- une troisième phase lorsqu'on atteint le régime de ralenti (n_11) du moteur à combustion interne (12).

9. Procédé selon la revendication 8,
**caractérisé en ce que**
dans la première phase, on injecte du carburant avant l'injecteur du cylindre respectif dans lequel doit se produire la combustion suivante selon la détection de la fin du fonctionnement.

10. Procédé selon la revendication 8,
**caractérisé en ce que**
dans la première phase, on passe la boîte de vitesses (24) en position neutre (consigne_g pour modifier l'état de fonctionnement, état_g).

11. Procédé selon la revendication 8,
**caractérisé en ce que**
dans la première phase, on accélère les masses d'inertie par la machine électrique (18) jusqu'à une vitesse de rotation (m_fermeture).

12. Procédé selon la revendication 11,
**caractérisé en ce que**
la vitesse de rotation (n_fermeture) est prédéfinie en fonction de la température du moteur (théta_m).

13. Procédé selon l'une quelconque des revendications 8 et 9,
**caractérisé en ce que**
dans la seconde phase il y a l'allumage du mélange air/carburant dans le cylindre sélectionné.

14. Procédé selon l'une quelconque des revendications 8 et 11,
**caractérisé en ce que**
dans la seconde phase, on soutient le couple par la machine électrique (18).

**15.** Procédé selon l'une quelconque des revendications 8 et 11,
**caractérisé en ce que**
dans la seconde phase, on freine les masses d'inertie par l'embrayage (22) suivant une courbe caractéristique prédéfinie pour le régime moteur (n_m).

**16.** Procédé selon la revendication 8,
**caractérisé en ce que**
dans la troisième phase, on commute le mode de fonctionnement de la machine électrique (18) sur le mode de générateur.

**17.** Procédé selon l'une quelconque des revendications précédentes,
**caractérisé en ce que**
l'embrayage (22) est à commande hydraulique et on utilise comme actionneur une pompe hydraulique (28) indépendamment du régime moteur (n_m).

**18.** Procédé selon l'une quelconque des revendications 8 et 17,
**caractérisé en ce que**
dans la première phase, on active la pompe hydraulique (28).

**19.** Procédé selon l'une quelconque des revendications précédentes,
**caractérisé en ce que**
la boîte de vitesses (24) est un convertisseur hydrodynamique et l'actionneur est une pompe hydraulique (28).

**20.** Procédé selon l'une quelconque des revendications 8 et 19,
**caractérisé en ce que**
dans la première phase le liquide hydraulique du convertisseur est aspiré par la pompe hydraulique (28) et ce liquide est de nouveau fourni au convertisseur au cours de la troisième phase.

**21.** Dispositif de démarrage d'un moteur à combustion interne ayant au moins les composants suivants :

- un système d'entraînement électrique notamment un démarreur à inertie selon lequel une machine électrique est reliée à un arbre directement ou par une boîte de vitesses,
- un embrayage commandé qui permet la transmission de la force entre le vilebrequin du moteur à combustion interne et l'arbre,
- un moteur à combustion interne ayant un ensemble de capteurs intégrés pour saisir les paramètres de fonctionnement tels que notamment l'angle de l'arbre à cames et l'angle du vilebrequin, et
- des capteurs associés aux composants pour saisir des paramètres de fonctionnement ainsi que des actionneurs permettant de modifier les paramètres de fonctionnement des composants du dispositif de démarrage, le dispositif de démarrage (10) ayant une commande de ligne d'entraînement (26) avec des moyens pour enregistrer et exploiter les paramètres de fonctionnement et pour prédéfinir des grandeurs de consigne des actionneurs pendant le mode marche/arrêt,

**caractérisé en ce que**
pendant le mode arrêt la commande de la ligne d'entraînement (26) ouvre l'embrayage (22) en fonction d'un angle de vilebrequin (alpha_m), d'un régime moteur (n_m) et d'une température de moteur (théta_m), pour atteindre une position d'arrêt permettant de déclencher une combustion dans un cylindre lors du redémarrage, avec une rotation aussi faible que possible du vilebrequin (16).

**22.** Dispositif de démarrage selon la revendication 21,
**caractérisé en ce que**
l'embrayage (22) est un embrayage à friction dont la liaison de force est réglée par un moyen électromécanique, un moyen électrohydraulique ou un moyen hydraulique.

**23.** Dispositif de démarrage selon la revendication 22,
**caractérisé en ce qu'**
une pompe hydraulique (28) fournit la pression hydraulique en fonction d'un régime moteur (n_m) commandé.

**24.** Dispositif de démarrage selon l'une quelconque des revendications 21 à 23,

**caractérisé en ce que**

la boîte de vitesses (24) est une boîte automatique à rapport, un convertisseur hydrodynamique ou une boîte de vitesses automatisée.

25. Dispositif de démarrage selon la revendication 24,
**caractérisé en ce que**

la pompe hydraulique (28) est un actionneur du convertisseur hydrodynamique.

Fig.1

Fig.2

n_m
alpha_m
theta_m

Start/Stop

md_kw_soll/
md_eas_soll

n_em

md_em_soll/ Status_g
n_em_soll

Vorgaben_g

Vorgaben_p

Status_p

md_kw
n_m

md_eas

md_em
n_em

md_ge
n_ge

26

12

16

22

30

18

20

24

28

EP 1 113 169 B1

18

Fig.3

n_m
alpha_m
theta_m

S2

S4

Dp_soll

S5

md_kw_soll

n_em_soll

Vorgaben_g

S1

S3

S6

S7

Start/Stop

md_kw_soll

n_em_soll

Vorgaben_g

12

22

18

24

EP 1 113 169 B1

Fig.4

EP 1 113 169 B1